(19)

Europäisches
Patentamt
European
Patent Office
Office européen
des brevets

(11)    EP 2 524 859 A2

(12)    **EUROPEAN PATENT APPLICATION**

(43) Date of publication:
21.11.2012  Bulletin 2012/47

(51) Int Cl.:
*B62D 37/06* ^(2006.01)

(21) Application number: 12168301.5

(22) Date of filing: 16.05.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority:  17.05.2011  JP 2011109961

(71) Applicants:
 • JTEKT CORPORATION
 Osaka-shi
 Osaka 542-8502 (JP)
 • Suda, Yoshihiro
 Tokyo 145-0071 (JP)

(72) Inventors:
 • Mukaide, Naomasa
 Osaka-shi,, Osaka 542-8502 (JP)
 • Kawahara, Sadahiro
 Osaka-shi,, Osaka 542-8502 (JP)
 • Takahata, Ryouichi
 Osaka-shi,, Osaka 542-8502 (JP)
 • Suda, Yoshihiro
 Tokyo,, Tokyo 113-8654 (JP)
 • Huh, Junhoi
 Tokyo,, Tokyo 113-8654 (JP)
 • Aki, Masahiko
 Tokyo,, Tokyo 113-8654 (JP)
 • Lin, Shihpin
 Tokyo,, Tokyo 113-8654 (JP)

(74) Representative: Winter, Brandl, Fürniss, Hübner,
Röss, Kaiser, Polte - Partnerschaft
Bavariaring 10
80336 München (DE)

(54)    **Vehicle overturn preventing device**

(57)    A vehicle overturn prevention device includes a first flywheel disposed in a front portion of a trailer of a combination vehicle, and a second flywheel disposed in a rear portion of the trailer. Each of the first and second flywheels is mounted on the vehicle through a double-gimbal support mechanism. When the combination vehicle makes a left turn (YES in step S3), a second gimbal shaft of the first flywheel that is orthogonal to the front-back direction of the combination vehicle is restrained, but a fourth gimbal shaft of the second flywheel that is orthogonal to the front-back direction of the combination vehicle is released (step S4). When the combination vehicle makes a right turn (NO in step S3), the fourth gimbal shaft of the second flywheel is restrained, but the second gimbal shaft of the first flywheel is released (step S7).

F I G . 11

EP 2 524 859 A2

**Description**

BACKGROUND OF THE INVENTION

1. Field of the Invention

The present invention relates to a device for preventing an overturn of a vehicle by suppressing roll motion of a vehicle during turning of a vehicle.

2. Description of Related Art

Vehicle overturn prevention devices that prevent an overturn of a vehicle by suppressing roll motion of the vehicle are known. An example of such vehicle overturn prevention devices includes a flywheel for storing energy that is mounted on a vehicle as a so-called double-gimbal support mechanism (see Japanese Patent Application Publication No. 2008-143390 (JP-2008-143390-A)). In the device according to JP-2008-143390-A, in the case where an abnormality occurs in roll motion of a railway vehicle, a gimbal shaft that is orthogonal to the front-back direction of the vehicle is restrained to generate a gyro effect on the flywheel so that the gyro effect acts as a stabiliser against roll motion of the vehicle.

It is desirable to effectively suppress roll motion of a vehicle using a flywheel-type vehicle overturn prevention device.

SUMMARY OF THE INVENTION

The present invention provides a flywheel-type vehicle overturn preventing device that prevents an overturn of a vehicle by effectively suppressing roll motion of a vehicle during a turn. More specifically, the present invention provides a flywheel-type vehicle overturn prevention device that includes a plurality of (for example, two) flywheels.

The direction of a gyro moment that is generated on a vehicle by a flywheel depends on the rotational direction of the flywheel. More specifically, if an angle of 90° or greater is provided between the vector of the yaw angle speed of the vehicle and the vector of the angular momentum of the flywheel, the gyro effect of the flywheel acts adversely.

An aspect of the present invention relates to a vehicle overturn prevention device that is mounted on a vehicle to prevent an overturn of the vehicle. The vehicle overturn prevention device includes: a first flywheel device that includes a first flywheel that is configured as an energy storage device and that rotates in a first rotational direction, and a first gimbal support structure that rotatably supports the first flywheel about a first shaft and a second shaft that extends orthogonally to the first shaft and orthogonally to a front-back direction of the vehicle; and a second flywheel device that includes a second flywheel that is configured as an energy storage device and that rotates in a second rotational direction that is opposite to the first rotational direction, and a second gimbal support structure that rotatably supports the second flywheel about a third shaft and a fourth shaft that extends orthogonally to the third shaft and orthogonally to the front-back direction of the vehicle. The first gimbal support structure includes first rotation restriction means for restricting rotation of the first flywheel about the second shaft. The second gimbal support structure includes second rotation restriction means for restricting rotation of the second flywheel about the fourth shaft. The vehicle overturn prevention device further includes rotation restriction control means for controlling the first rotation restriction means and the second rotation restriction means so as to restrict rotation of the first flywheel without restricting rotation of the second flywheel when the vehicle makes roll motion in one roll direction and so as to restrict rotation of the second flywheel without restricting rotation of the first flywheel when the vehicle makes roll motion in the other roll direction.

According to the above aspect, in the vehicle, the first flywheel is rotatably supported by both the first and second shafts. In this state, the first flywheel is free in three axial directions with respect to the vehicle, and thus no gyro effect is generated on the first flywheel. Meanwhile, in a state in which rotation of the first flywheel about the second shaft which is orthogonal to the front-back direction of the vehicle is restricted, a gyro effect is generated on the first flywheel during a turn of the vehicle so that the gyro effect can act as a stabiliser against roll motion of the vehicle.

In the vehicle, in addition, the second flywheel is rotatably supported by both the third and fourth shafts. In this state, the second flywheel is free in three axial directions with respect to the vehicle, and thus no gyro effect is generated on the second flywheel. Meanwhile, in a state in which rotation of the second flywheel about the fourth shaft which is orthogonal to the front-back direction of the vehicle is restricted, a gyro effect is generated on the second flywheel during a turn of the vehicle so that the gyro effect can act as a stabiliser against roll motion of the vehicle.

The first and second flywheels rotate in opposite directions to each other. Each of the direction of the gyro moment which is generated on the vehicle by the first and second flywheels depends on the rotational direction of the flywheels. Thus, the direction of the gyro moment which is generated on the vehicle by the first flywheel and the direction of the gyro moment which is generated on the vehicle by the second flywheel can be made different from each other.

When the vehicle makes roll motion in one roll direction, only the rotation of the second shaft of the first flywheel device is restricted, without restricting the rotation of the fourth shaft of the second flywheel device, to generate a gyro effect only on the first flywheel. When the vehicle makes roll motion in the other roll direction, meanwhile, only the rotation of the fourth shaft of the second flywheel device is restricted, without restricting the rotation of the second shaft of the first flywheel device, to generate a gyro effect only on the second flywheel. In other words, the flywheel that generates a gyro effect can be switched between the first and second flywheels in accordance with the direction of roll motion of the vehicle. Thus, according to the above aspect, the gyro effect of either of the flywheels can be caused to act as a stabiliser against roll motion of the vehicle to prevent an overturn of the vehicle, irrespective of whether the vehicle is turning left or turning right.

In the above aspect, the first flywheel device and the second flywheel device may be arranged in the front-back direction, a left-right direction, or an up-down direction of the vehicle.

In the above aspect, the vehicle overturn prevention device may further include: roll state detection means for detecting a roll state associated with roll motion of the vehicle; and energy recovery control means for executing energy recovery control in which energy of the vehicle is recovered by the first flywheel and the second flywheel in the case where the roll state which is detected by the roll state detection means exceeds a threshold that is determined in advance.

According to the above aspect, energy of the vehicle is recovered by the flywheel through the energy recovery control. When the energy is recovered, the rotational speed of the flywheel, which is rotating, is further raised to enhance the gyro effect which is generated on the flywheel. In other words, the gyro moment which is generated on the flywheel can be increased.

In the above aspect, the vehicle overturn prevention device may further include: alarming means for issuing a predetermined alarm to a driver of the vehicle; and alarm control means for controlling the alarming means so as to issue an alarm that promotes an operation to decelerate the vehicle.

In the above aspect, the vehicle overturn prevention device may further include vehicle deceleration control signal transmission means for transmitting a control signal for decelerating the vehicle.

In the above aspect, the vehicle deceleration control signal transmission means may control the energy recovery control means to decelerate the vehicle.

In the above aspect, an amount of energy that is stored in the first flywheel and an amount of energy that is stored in the second flywheel may be different from each other.

In this case, the amount of energy that is stored in one of the first and second flywheels on which a gyro effect that acts as a stabiliser on the vehicle which is turning left is generated (hereinafter referred to as "left-turn flywheel") may be larger than the amount of energy that is stored in the flywheel on which a gyro effect that acts as a stabiliser on the vehicle which is turning right (hereinafter referred to as "right-turn flywheel").

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is an exploded perspective view that shows a schematic configuration of a combination vehicle that incorporates a vehicle overturn prevention device according to a first embodiment of the present invention;
FIG. 2 shows a schematic configuration of first and second flywheel devices;
FIGs. 3A and 3B are each a cross-sectional view that shows a schematic configuration of an example of first and/or second restraint mechanisms;
FIG. 4 is a cross-sectional view that shows a schematic configuration of another example of the first and/or second restraint mechanisms;
FIG. 5 is a block diagram that shows the electrical configuration of the vehicle overturn prevention device according to the first embodiment of the present invention;
FIGs. 6A and 6B illustrate a gyro effect of a general flywheel mounted on a vehicle through a single-gimbal support mechanism;
FIGs. 7A to 7C show a mechanism that prevents an overturn of a combination vehicle using the vehicle overturn prevention device according to the first embodiment of the present invention;
FIG. 8 shows coordinate axes of the combination vehicle;
FIG. 9 is a graph that shows variations in roll angle of a vehicle model;
FIG. 10 is a graph that shows variations in roll angle of a mock-up vehicle;
FIG. 11 is a flowchart that shows the flow of an abnormal roll motion process that is executed in the case where an abnormality occurs in roll motion of the combination vehicle;
FIGs. 12A and 12B show variations in attitude of first and second flywheels that occur in the case where an abnormality occurs in roll motion when the combination vehicle makes a left turn;

FIGs. 13A and 13B show variations in attitude of the first and second flywheels that occur in the case where an abnormality occurs in roll motion when the combination vehicle makes a right turn;

FIG. 14 is a block diagram that shows the electrical configuration of a vehicle overturn prevention device according to a second embodiment of the present invention;

FIG. 15 is a flowchart that shows the flow of an abnormal roll motion process that is executed in the case where an abnormality occurs in roll motion of a combination vehicle; and

FIG. 16 is a block diagram that shows the electrical configuration of a vehicle overturn prevention device according to a third embodiment of the present invention.

## DETAILED DESCRIPTION OF EMBODIMENTS

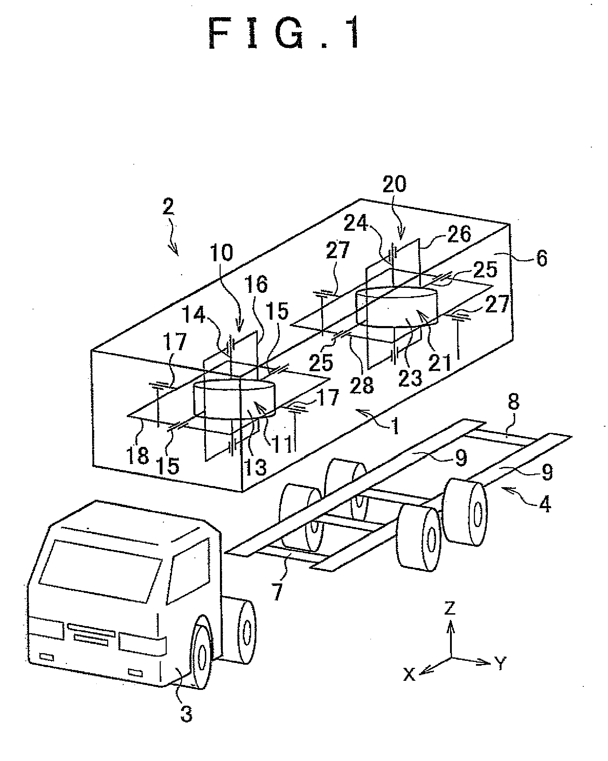

Embodiments of the present invention will be described below with reference to the accompanying drawings. FIG. 1 is an exploded perspective view that shows a schematic configuration of a combination vehicle 2 that serves as an example of an automotive vehicle that incorporates a vehicle overturn prevention device 1 according to a first embodiment of the present invention. The combination vehicle 2 is a semi-trailer-type combination vehicle, for example, and includes a tractor 3 that serves as a towing vehicle, and a semi-trailer (hereinafter simply referred to as "trailer") 4 that serves as a towed vehicle. The tractor 3 and the trailer 4 are coupled to each other by a coupler (not shown) that serves as a coupling that can make rotational motion about a vertical axis. The trailer 4 is configured such that a container 6 can be mounted on the upper surface of the trailer 4. In the following description, the direction to the front of the combination vehicle 2 is defined as X direction, the direction to the left of the combination vehicle 2 is defined as Y direction, and the direction to vertically above the combination vehicle 2 is defined as Z direction.

First and second flywheel devices 10 and 20 are mounted on the combination vehicle 2 to be arranged side by side in the front-back direction of the combination vehicle 2. More particularly, the first flywheel device 10 is disposed in the front portion of the trailer 4, and the second flywheel device 20 is disposed in the rear portion of the trailer 4. The trailer 4 includes a front frame 7 that extends in the left-right direction, a rear frame 8 that extends in the left-right direction, and a plurality of (for example, two) connecting frames 9 that connect the front frame 7 and the rear frame 8 to each other. The left and right connecting frames 9 extend in the front-back direction to connect the left and right ends of the front frame 7 and the left and right ends of the rear frame 8 to each other. The first and second flywheel devices 10 and 20 are fixed to the connecting frames 9. In FIG. 1, the first and second flywheel devices 10 and 20 are depicted in the container 6 from the viewpoint of viewability of the drawing. However, the flywheel devices 10 and 20 may be disposed on the trailer 4. In addition, the trailer 4 is also provided with an energy supply device (not shown) that supplies energy to or allows energy to be recovered by the first and second flywheel devices 10 and 20. The energy supply device is also fixed to the connecting frame 9. Thus, with the first and second flywheel devices 10 and 20 mounted side by side in the front-back direction of the combination vehicle 2, a sufficient space for arrangement of peripheral devices such as the energy supply device can be secured also in the width direction of the trailer 4.

The first flywheel device 10 includes a first flywheel 11 for storing energy. The second flywheel device 20 includes a second flywheel 21 for storing energy. An energy supply device is connected to the first and second flywheels 11 and 21. A generator motor is applied as the energy supply device according to the present invention. The energy supply device functions as an electric motor when electric energy is stored (charged) into the first and second flywheels 11 and 21, and functions as a power generator when the electric energy is released (discharged) from the first and second flywheels 11 and 21. Examples of such a generator motor include a generator motor described in Japanese Patent Application Publication No. 11-69511 (JP-A-11-69511).

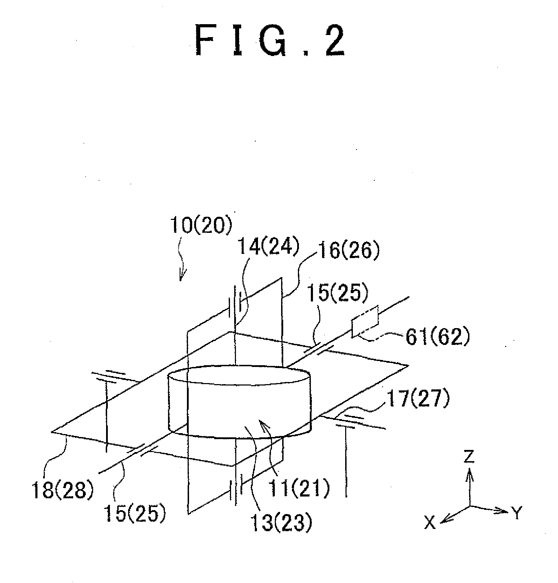

FIG. 2 shows a schematic configuration of the first flywheel device 10. The configuration of the first flywheel device 10 will be described with reference to FIGs. 1 and 2. The first flywheel 11 includes a disc-like first wheel body (not shown) and a first housing 13 that houses the first wheel body. The first wheel body is formed using cast iron or CFRP (Carbon Fiber Reinforced Plastics). The first wheel body rotates about a first rotary shaft 14 with respect to the first housing 13 at a high speed anticlockwise as viewed in plan. In other words, the direction of the angular speed of the first wheel body is from bottom up. Energy is stored into the first flywheel 11 using the energy of the rotation of the first wheel body. Rotation of the first wheel body is hereinafter occasionally referred to as rotation of first flywheel 11.

The first flywheel 11 is supported by a first gimbal 16, which serves as an inner gimbal, so as to be rotatable about the first rotary shaft 14. The first gimbal 16 is rotatably supported by a second gimbal 18, which serves as an outer gimbal, via a first gimbal shaft (first shaft) 15. The second gimbal 18 is supported by a housing (not shown) of the first flywheel device 10 via a second gimbal shaft (second shaft) 17. The second gimbal shaft 17 extends along the Y direction (to be included in a plane that is orthogonal to the X direction). The first gimbal shaft 15 extends to be included in a plane (X-Z plane) that is orthogonal to the Y direction. The imaginary intersection point between the first gimbal shaft 15 and the second gimbal shaft 17 coincides with the centre of gravity of the first flywheel 11 (first wheel body). Therefore, with no external force acting on the combination vehicle 2, the first flywheel 11 can be kept in a predetermined attitude (with the first rotary shaft 14 extending along the vertical direction).

The second flywheel device 20 is configured in the same way as the first flywheel device 10. The configuration of the second flywheel device 20 will be described with reference to FIGs. 1 and 2. The second flywheel 21 includes a disc-like second wheel body (not shown) and a second housing 23 that houses the second wheel body. The second wheel body rotates about a second rotary shaft 24 with respect to the second housing 23 at a high speed clockwise as viewed in plan (in the direction opposite to the rotational direction of the first flywheel 11). In other words, the direction of the angular speed of the second wheel body is from top down. Energy is stored into the second flywheel 21 using the kinetic energy of the rotation of the second wheel body. Rotation of the second wheel body is hereinafter occasionally referred to as rotation of second flywheel 21.

In the embodiment, the first wheel body and the second wheel body have the same diameter and the same mass as each other, for example. However, the present invention is not limited thereto. The second flywheel 21 is supported by a third gimbal 26, which serves as an inner gimbal, so as to be rotatable about the second rotary shaft 24. The third gimbal 26 is rotatably supported by a fourth gimbal 28, which serves as an outer gimbal, via a third gimbal shaft (third shaft) 25. The fourth gimbal 28 is supported by a housing (not shown) of the second flywheel device 20 via a fourth gimbal shaft (fourth shaft) 27. The fourth gimbal shaft 27 extends along the Y direction (to be included in a plane that is orthogonal to the X direction). The third gimbal shaft 25 extends to be included in a plane (X-Z plane) that is orthogonal to the Y direction. The imaginary intersection point between the third gimbal shaft 25 and the fourth gimbal shaft 27 coincides with the centre of gravity of the second flywheel 21 (second wheel body). Therefore, with no external force acting on the combination vehicle 2, the second flywheel 21 can be kept in a predetermined attitude (with the second rotary shaft 24 extending along the vertical direction).

In the first and second flywheel devices 10 and 20, the first and third gimbals 16 and 26 may serve as outer gimbals, and the second and fourth gimbals 18 and 28 may serve as inner gimbals. In this case, the first and third gimbal shafts 15 and 25 may extend along the X direction, and the second and fourth gimbal shafts 17 and 27 may extend to be included in a plane (Y-Z plane) that is orthogonal to the X direction.

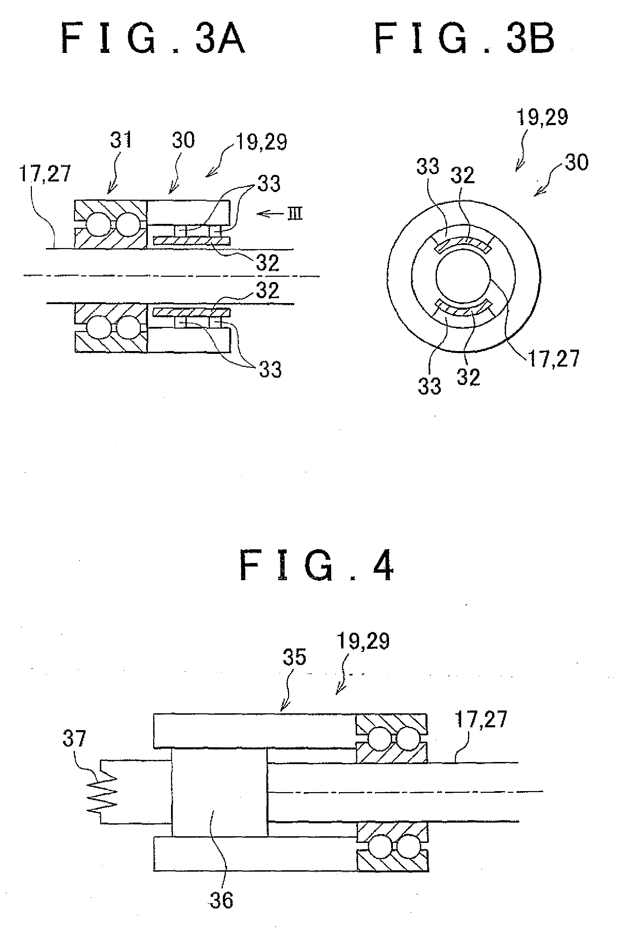

The first flywheel device 10 includes a first restraint mechanism (first rotation restriction means) 19 (see FIGs. 3A, 3B, and 4) that restrains the second gimbal shaft 17 to restrict rotation of the first flywheel 11 about the second gimbal shaft 17. The second flywheel device 20 includes a second restraint mechanism (second rotation restriction means) 29 (see FIGs. 3A, 3B, and 4) that restrains the fourth gimbal shaft 27 to restrict rotation of the second flywheel 21 about the fourth gimbal shaft 27. Examples of the first and/or second restraint mechanism 19, 29 are shown in FIGs. 3A, 3B, and FIG. 4.

FIGs. 3A and 3B show a schematic configuration in which a friction brake 30 is adopted as an example of the first and/or second restraint mechanisms 19, 29. FIG. 3A is a cross-sectional view that shows an essential portion of the friction brake 30. FIG. 3B shows the friction brake 30 as seen along the arrow III of FIG. 3A. The friction brake 30 includes brake pads 32 disposed on a bearing 31 of the second and/or fourth gimbal shafts 17, 27, and pistons 33 that push the brake pads 32 against the outer peripheral surface of the second and/or fourth gimbal shafts 17, 27. Driving the pistons 33 can push the brake pads 32 against the outer peripheral surface of the second and/or fourth gimbal shafts 17, 27, which can restrain the second and/or fourth gimbal shafts 17, 27 to restrict rotation of the gimbal shafts 17, 27.

FIG. 4 shows a schematic configuration in which an electromagnetic brake 35 is adopted as another example of the first and/or second restraint mechanisms 19, 29. In the electromagnetic brake 35, a generator 36 generates a voltage (induced electromotive force), and the induced electromotive force is consumed as thermal energy by the resistance of a resistor 37 to act as a brake.

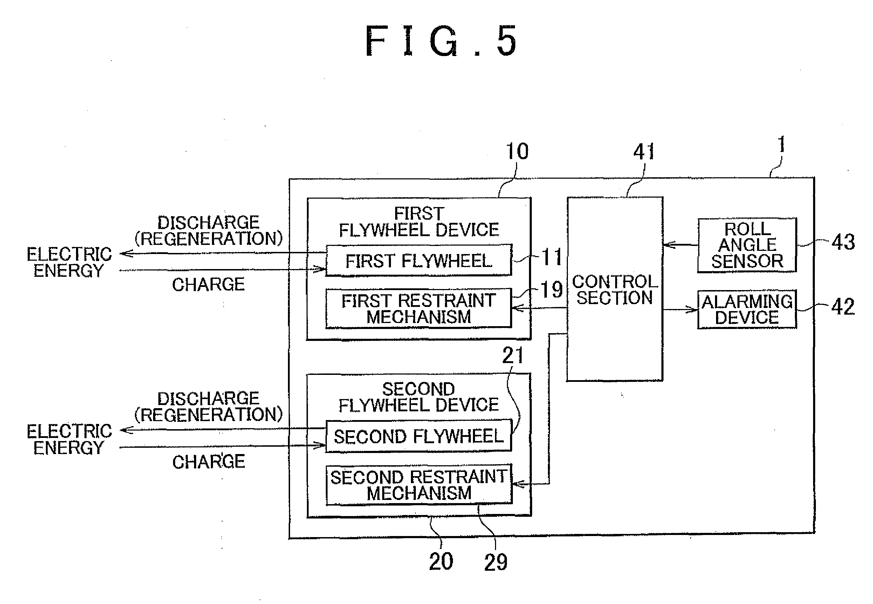

FIG. 5 is a block diagram that shows the electrical configuration of the vehicle overturn prevention device according to the first embodiment of the present invention. The vehicle overturn prevention device 1 includes a control section 41 that includes a microcomputer. The first restraint mechanism 19, the second restraint mechanism 29, and an alarming device 42 are connected to the control section 41 so as to be controlled. The alarming device 42 issues an alarm to a driver of the combination vehicle 2, and disposed in a driver's cabin of the tractor 3 (see FIG. 1), for example. Examples of the alarming device 42 include a display monitor and a speaker. The control section 41 receives a detection output from a roll angle sensor (roll state detection means) 43 that detects the roll angle of the combination vehicle 2. The control section 41 can obtain not only the magnitude of the roll angle of the combination vehicle 2 but also the direction of roll motion of the combination vehicle 2 on the basis of the detection output of the roll angle sensor 43. The roll angle sensor 43 is disposed in the trailer 4, for example. The roll angle sensor 43 is formed by a gyro sensor, for example.

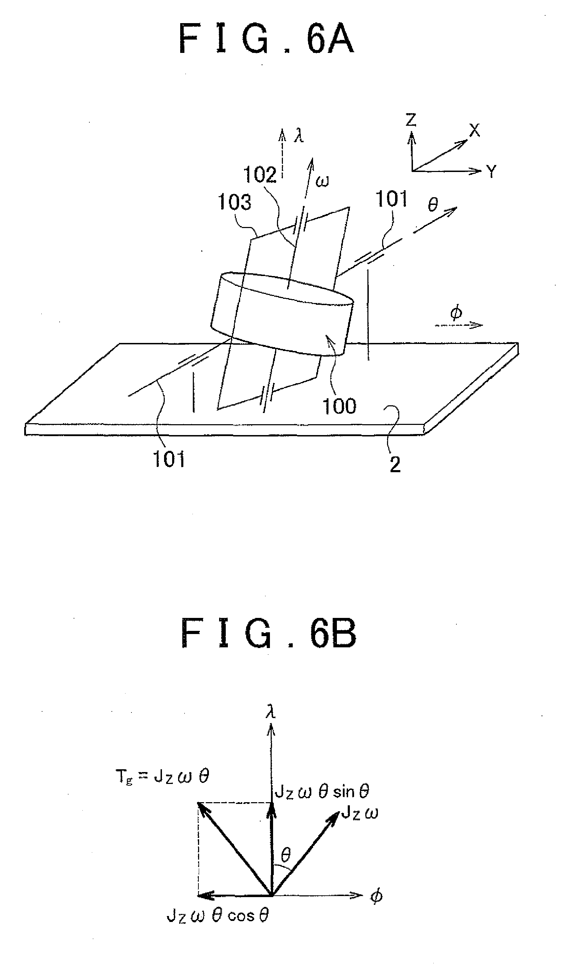

FIGs. 6A and 6B illustrate a gyro effect of a general flywheel 100 mounted on a vehicle through a single-gimbal support mechanism. FIG. 6A is a schematic diagram that shows a model for illustration of the gyro effect. FIG. 6B shows gyro moments that are generated in various directions. As in FIG. 1, the direction to the front of the combination vehicle 2 is defined as X direction, and the direction to the left of the combination vehicle 2 is defined as Y direction.

The flywheel 100 is mounted on the combination vehicle 2 with a gimbal shaft 101 extending along the X direction (the direction that coincides with the front-back direction of the combination vehicle 2). Automotive vehicles such as the combination vehicle 2 have a large yaw angle speed compared to other types of vehicles such as rail vehicles and water vehicles. In the case where the flywheel 100 is mounted on the combination vehicle 2 through a single-gimbal support mechanism, the yaw angle and the roll angle of the combination vehicle 2 serve as disturbances, and the gyro effect due to such disturbances affects motion of the combination vehicle 2 as indicated by the following formulas (2) and (3). The symbols that are used in the formulas (1) to (3) are described in Table 1.

$$J_y \ddot{\theta} + c\dot{\theta} + k\theta = J_z \varpi \dot{\phi} \cos\theta - J_z \varpi \dot{\lambda} \sin\theta + M \qquad (1)$$

$$I_x \ddot{\phi} + C_x \dot{\phi} + K_x \phi = -J_z \varpi \dot{\theta} \cos\theta + T_x \qquad (2)$$

$$I_z \ddot{\lambda} + C_z \dot{\lambda} + K_z \lambda = J_z \varpi \dot{\theta} \sin\theta + T_z \qquad (3)$$

[Table 1]

| | |
|---|---|
| ω | Angular speed of flywheel |
| θ | Rotational angle of gimbal shaft |
| φ | Roll angle of vehicle |
| λ | Yaw angle of vehicle |
| $J_y$ | Moment of inertia about pitch axis of flywheel |
| $J_y$ | Moment of inertia about yaw axis of flywheel |
| $I_x$ | Moment of inertia about roll axis of vehicle |
| $I_z$ | Moment of inertia about yaw axis of vehicle |
| H | Angular momentum of flywheel |
| $C_x$ | Attenuation coefficient of roll axis of vehicle |
| $C_z$ | Attenuation coefficient of yaw axis of vehicle |
| C | Attenuation coefficient of gimbal shaft |
| $K_x$ | Spring coefficient of roll axis of vehicle |
| $K_z$ | Spring coefficient of yaw axis of vehicle |
| k | Spring constant of gimbal shaft |
| $T_x$ | Disturbance torque about roll axis of vehicle |
| $T_z$ | Disturbance torque about yaw axis of vehicle |
| M | Torque applied to gimbal shaft |

When the formulas (1) to (3) and Table 1 are summarised in a matrix, the following formula (4) is obtained:

$$\begin{bmatrix} J_y & 0 & 0 \\ 0 & I_x & 0 \\ 0 & 0 & I_z \end{bmatrix} \begin{bmatrix} \ddot{\theta} \\ \ddot{\phi} \\ \ddot{\lambda} \end{bmatrix} + \begin{bmatrix} c & -J_y\omega\cos\theta & J_z\omega\sin\theta \\ 0 & C_x & J_z\omega\cos\theta \\ -J_z\omega\sin\theta & 0 & C_z \end{bmatrix} \begin{bmatrix} \dot{\theta} \\ \dot{\phi} \\ \dot{\lambda} \end{bmatrix} + \begin{bmatrix} k & 0 & 0 \\ 0 & K_x & 0 \\ 0 & 0 & K_z \end{bmatrix} \begin{bmatrix} \theta \\ \phi \\ \lambda \end{bmatrix} = \begin{bmatrix} M \\ T_x \\ T_z \end{bmatrix}$$

$$(4)$$

The terms for the gyro moments on the right side of the formulas (1) to (3) are shown in Table 2:

[Table 2]

| | | Angular momentum H | Disturbance angular speed Ω | Gyro moment H×Ω | |
|---|---|---|---|---|---|
| | | | | \|H×Ω\| | Manner of action |
| Formula (1) | First term on right side | $J_z(\omega)$ | Roll angle speed φ | $J_z\omega\phi\cos\theta$ | +Y direction of gimbal shaft |
| | Second term on right side | | Yaw angle speed λ | $J_z\omega\lambda\sin\theta$ | -Y direction of gimbal shaft |
| Formula (2) | First term on right side | | Gimbal angle speed θ | $J_z\omega\theta\cos\theta$ | -X direction of vehicle |
| Formula (3) | First term on right side | | | $J_z\omega\theta\sin\theta$ | +Z direction of vehicle |

The roll angle speed (see Table 2) and the yaw angle speed (see Table 2) of the combination vehicle 2 generate a gyro moment on a gimbal 103 of the flywheel 100 about an axis that extends in the X direction (the gyro moment is obtained by subtracting the second term on the right side of the formula (1) from the first term on the right side of the formula (1); also see Table 2). The gyro moment generated on the gimbal 103 generates an angular speed on the gimbal 103 (gimbal angle speed shown in Table 2) to generate a gyro moment about an axis that extends in the roll direction of the combination vehicle 2, that is, the X direction (for the gyro moment, see the first term on the right side of the formula (3); also see Table 2). The gyro moment can be utilised to prevent an overturn of the combination vehicle 2. If the flywheel 100 is mounted on the combination vehicle 2 through a single-gimbal support mechanism as shown in FIG. 6, however, the gyro effect of the flywheel 100 may affect motion of the combination vehicle 2 even in the case where the combination vehicle 2 is travelling normally with no abnormality occurring in roll motion of the combination vehicle 2.

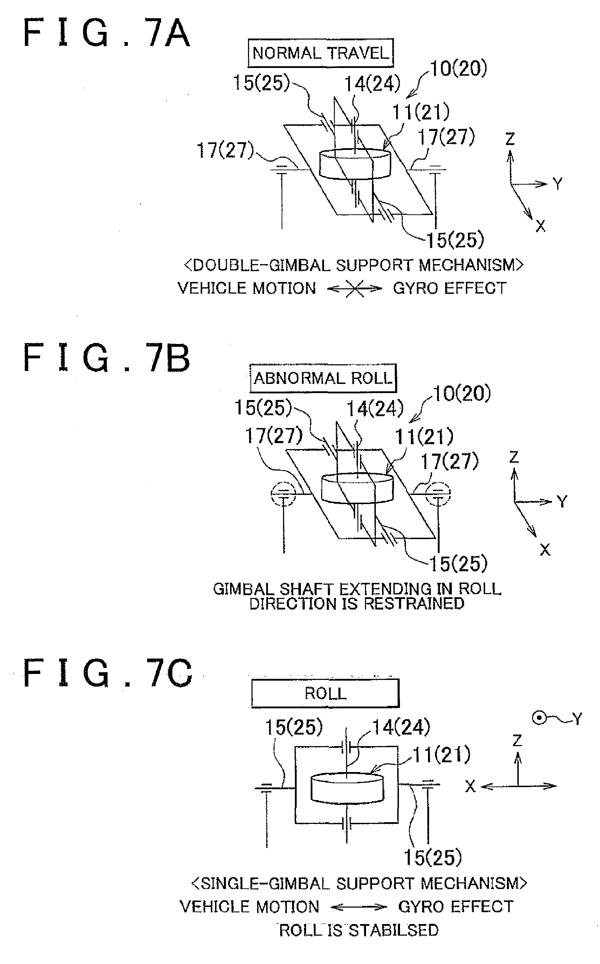

FIGs. 7A to 7C show a mechanism that prevents an overturn of the combination vehicle 2 adopted in the vehicle overturn prevention device 1. In contrast to the general single-gimbal support mechanism which is shown in FIGs. 6A and 6B, the flywheel device 10, 20 of the vehicle overturn prevention device 1 adopts a so-called double-gimbal support mechanism in which a flywheel is rotatably supported by two gimbal shafts 15, 17, 25, 27 as discussed earlier. When the combination vehicle 2 is travelling normally (see FIG. 7A), the flywheel 11, 21 is rotatably supported by two gimbal shafts 15, 17, 25, 27 (hence the name "double-gimbal support mechanism"). In this case, the flywheel 11, 21 is free in three axial directions with respect to the combination vehicle 2. This allows motion of the combination vehicle 2 and the gyro effect of the flywheel 11, 21 to be dissociated from each other during normal travel of the combination vehicle 2.

When an abnormality occurs in roll motion of the combination vehicle 2 (see FIG. 7B), the gimbal shaft 17, 27 which is orthogonal to the front-back direction of the combination vehicle 2 is restrained. Therefore, the flywheel 11, 12 is rotatable only about the gimbal shaft 15, 25 which extends in the front-back direction of the combination vehicle 2 (see FIG. 7C). In this case, a gyro effect is generated on the flywheel 11, 21 to allow motion of the combination vehicle 2 and the gyro effect of the flywheel 11, 21 to be associated with each other so that the gyro effect of the flywheel 11, 21 can act as a stabiliser against roll motion of the combination vehicle 2.

As is seen also from the formula (4), the effect of overturn prevention according to this technique depends on the direction of the yaw angle speed of the combination vehicle 2, that is, the turning direction of the combination vehicle 2. In other words, the rotational direction of the flywheel 11, 21 determines whether the generated gyro moment acts as a stabiliser against roll motion of the combination vehicle 2 or acts to adversely affect the roll motion.

That is, when the direction of the angular speed of the flywheel 11, 21 is from bottom up (the rotational direction of the flywheel 11, 21 is anticlockwise as viewed in plan), a gyro moment in a roll direction that is anticlockwise (in this case, Y direction) toward the front (X direction) is generated on the combination vehicle 2. The gyro moment can act as a stabiliser against roll motion of the combination vehicle 2 that is clockwise (opposite to the Y direction) toward the front (X direction). The combination vehicle 2 makes roll motion that is clockwise (opposite to the Y direction) toward the front (X direction) mainly when the combination vehicle 2 makes a left turn. Thus, it is possible to prevent an overturn of the combination vehicle 2 during a left turn utilising a gyro moment generated on the combination vehicle 2 when the direction of the angular speed of the flywheel 11, 21 is from bottom up.

When the direction of the angular speed of the flywheel 11, 21 is from top down (the rotational direction of the flywheel.11, 21 is clockwise as viewed in plan), meanwhile, a gyro moment in a roll direction (in this case, opposite to the Y direction) that is clockwise toward the front (X direction) is generated on the combination vehicle 2. The gyro moment can act as a stabiliser against roll motion of the combination vehicle 2 that is anticlockwise (Y direction) toward the front (X direction). The combination vehicle 2 makes roll motion that is anticlockwise (Y direction) toward the front (X direction) mainly when the combination vehicle 2 makes a right turn. Thus, it is possible to prevent an overturn of the combination vehicle 2 during a right turn utilising a gyro moment generated on the combination vehicle 2 when the direction of the angular speed of the flywheel 11, 21 is from top down.

Other details of the mechanism for overturn prevention through the flywheel 11, 21 are as described in JP-2008-143390-A. Next, a numerical simulation and a verification experiment made for the purpose of verifying the effectiveness of vehicle overturn prevention through a gyro effect will be described. In the verification, it was assumed that one turning direction of a vehicle was determined and that one flywheel that matched the turning direction was mounted on the vehicle.

<Numerical Simulation>

A numerical simulation was made to verify the effectiveness of overturn prevention through a gyro effect of a flywheel mounted on a vehicle. In the numerical simulation, a general-purpose multibody dynamics programme ADAMS was used. A full-scale model of a trailer for marine containers (with a maximum payload of 24000 kg) was used. The combination vehicle used as the model included a tractor (7000 kg), a trailer (3500 kg), and one flywheel, and was constructed using 28 rigid bodies. A container with a length of 40 feet (ft) and a weight of 24000 kg was assumed as the container to be mounted on the trailer.

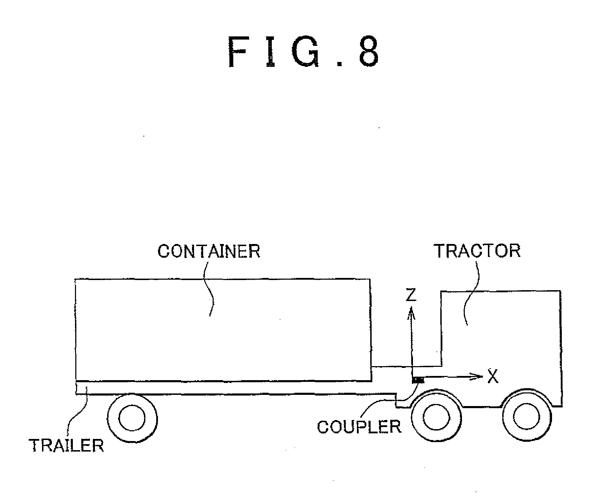

FIG. 8 shows the coordinate axes of the combination vehicle that includes the tractor and the trailer. As shown in FIG. 8, the coordinates are defined with reference to the coupler. In this case, the centre of gravity of the container is positioned at an X coordinate of -5.9 m and a Z coordinate of 1.38 m, and the centre of gravity of the flywheel is positioned at an X coordinate of -6.0 m and a Z coordinate of 0.68 m.

A numerical simulation was performed under travel conditions with the vehicle model travelling straight ahead at a constant vehicle speed of 110 km/h and with the front wheels of the tractor steered to an actual steering angle of 4 degrees with respect to the straight-ahead direction for a period of time from 10 to 11 seconds to verify the effectiveness of overturn prevention through the gyro effect of the flywheel mounted on the vehicle. Under such travel conditions, which were determined with reference to instances in which a combination vehicle was overturned, the combination vehicle travelled at a speed that is higher than the legal speed limit in Japan (80 km/h) for lorries that travel on an express way known as motorway or freeway etc., and the vehicle model would be overturned under no control. The moment of inertia of the flywheel was I = diag (25.7, 17.1, 17.1) (in units of kgm$^2$), the rotational angular speed was varied among 0 rpm (that is, under no control), 10000 rpm, 13000 rpm, 15000 rpm, and 18000 rpm.

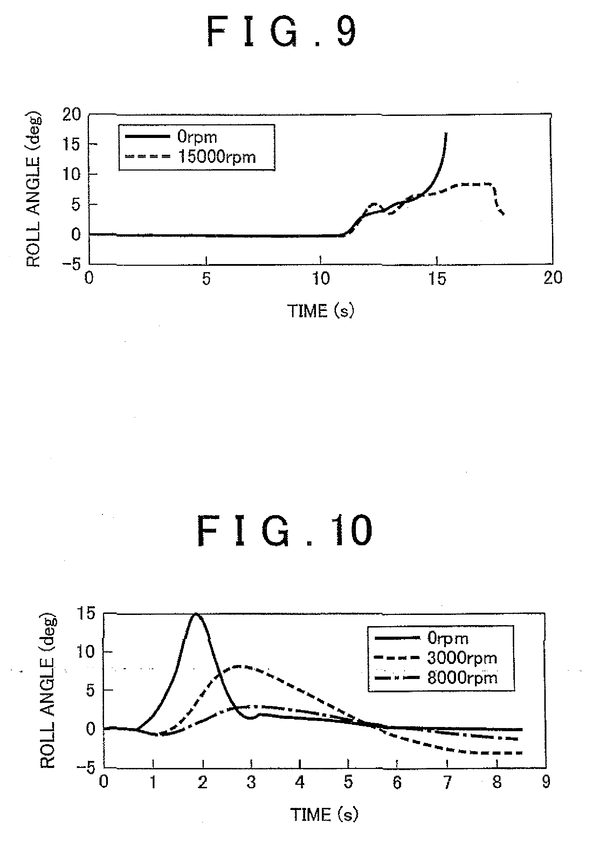

Variations in roll angle of the vehicle model for rotational angular speeds of the flywheel of 0 rpm (that is, under no control) and 15000 rpm are respectively shown in FIG. 9. It is seen from FIG. 9 that both the roll angle speed and the roll angle diverge at about 15 seconds to cause an overturn under a condition where the flywheel does not have an angular momentum (when the rotational angular speed of the flywheel is 0 rpm), that is, under no control. It is also seen from FIG. 9 that roll motion of the combination vehicle is suppressed by the gyro effect of the flywheel to prevent an overturn under a condition where the flywheel has an angular momentum of about 40000 Nms or more, that is, under control.

<Verification through Mock-up Experiment>

In the mock-up experiment, a mock-up vehicle and a flywheel with a scale of 1:8 were manufactured to perform a mock-up experiment that simulates an overturn of a combination vehicle using a bench test device that considers safety and reproducibility. Motion of the mock-up vehicle is reproduced such that yaw motion of the vehicle is reproduced through rotation of the bench test device and roll motion and pitch motion, which are generated by lateral acceleration during a turn due to a centrifugal acceleration generated by the rotation of the bench test device, are reproduced on the mock-up vehicle side.

FIG. 9 which shows the results of the numerical simulation which was made to verify the effectiveness of overturn prevention through a gyro effect For the yaw angle speed of the mock-up vehicle, that is, the rotational speed of the bench test device, a yaw angle speed with a scale of 1:8 was given on the basis of the yaw angle speed calculated for a period from 9 seconds, which was 1 second before the actual steering angle was introduced, to 15.5 seconds, at which the roll angle and the roll angle speed of the combination vehicle would start diverging under no control. In order to verify the effectiveness of overturn prevention through a gyro effect and the difference in effect of overturn prevention among various angular momentums, the rotational speed of the flywheel was set to 0 rpm (that is, under no control), 3000 rpm, and 8000 rpm. FIG. 10 shows variations in roll angle of the mock-up vehicle.

It is seen also from FIG. 10 that roll motion is more effectively suppressed under control than under no control. It is also seen that roll motion is more effectively suppressed as the rotational speed of the flywheel rises. It is further seen that the peak of the roll angle of the combination vehicle (peak of roll motion of the combination vehicle) can be delayed increasingly as the rotational speed of the flywheel rises. Furthermore, it is also seen from FIG. 10 that the period from the start of the rise of the roll angle to the peak of the roll angle can be shortened increasingly as the rotational speed of the flywheel rises.

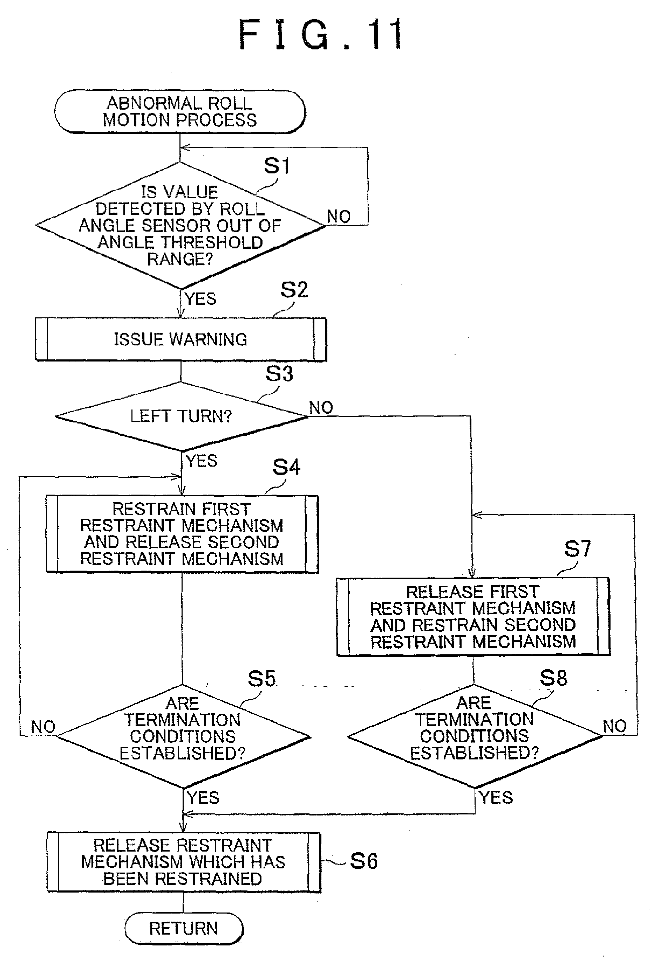

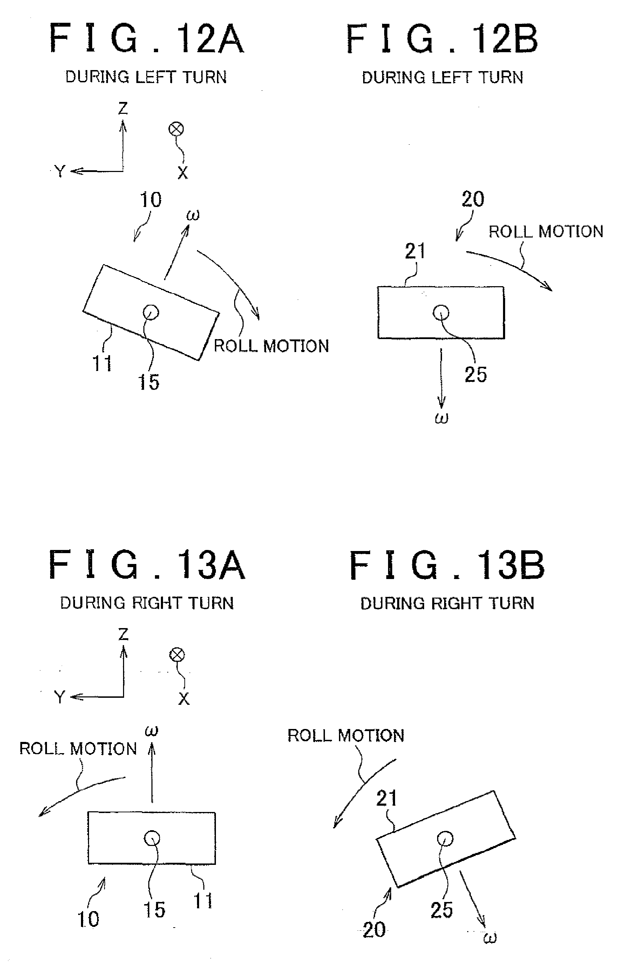

FIG. 11 is a flowchart that shows the flow of an abnormal roll motion process that is executed in the case where an abnormality occurs in roll motion of the combination vehicle 2. The process is executed by the control section 41 which is shown in FIG. 5. FIGs. 12A, 12B, 13A, and 13B show variations in attitude of the first and second flywheels 11 and 12 that occur in the case where an abnormality occurs in roll motion of the combination vehicle 2.

First, during travel of the combination vehicle 2, the control section 41 monitors whether the value detected by the roll angle sensor 43 falls within an angle threshold range (step S1).

If an abnormality occurs in roll motion of the combination vehicle 2 so that the detected roll angle exceeds the angle threshold (YES in step S1), the control section 41 activates the alarming device 42 to issue a warming to decelerate the combination vehicle 2 (step S2). In the case where the alarming device 42 is a display monitor, the warning may be a message to be displayed on the display monitor that prompts the driver to perform an operation to decelerate the combination vehicle 2 such as "Slow down" or "Brake". In the case where the alarming device 42 is a speaker, meanwhile, the warning may be an audio guidance to be output from the speaker that prompts the driver to perform an operation to decelerate the combination vehicle 2 such as "Slow down" or "Brake".

When the driver performs an operation for deceleration in response to the warning to decelerate the combination vehicle 2, energy of the combination vehicle 2 is recovered by the flywheel 11, 21. When the energy is recovered, the rotational speed of the flywheel 11, 21 which is rotating is further raised to increase the gyro moment (enhance the gyro effect) which is generated on the flywheel 11, 21.

As discussed earlier, roll motion of the combination vehicle 2 can be more effectively suppressed as the rotational speed of the flywheel 11, 21 which is rotating rises. Thus, an overturn of the combination vehicle 2 can be reliably prevented.

In addition, the control section 41 calculates the direction of the roll motion of the combination vehicle 2 on the basis of the detection output of the roll angle sensor 43. Specifically, the control section 41 detects whether the combination vehicle 2 is turning left. For example, when the combination vehicle 2 which is travelling makes a left turn (YES in step S3), the combination vehicle 2 makes roll motion that is anticlockwise (Y direction) toward the front (X direction) (see FIGs. 12A and 12B) so that the roll angle detected by the roll angle sensor 43 takes a positive value. When the combination vehicle 2 which is travelling turns right (NO in step S3), meanwhile, the combination vehicle 2 makes roll motion that is clockwise (opposite to the Y direction) toward the front (X direction) (see FIGs. 13A and 13B) so that the roll angle detected by the roll angle sensor 43 takes a negative value.

When the combination vehicle 2 which is travelling turns left, that is, when the detected roll angle has a positive value (YES in step S3), the control section 41 controls the first restraint mechanism 19 of the first flywheel device 10 so as to restrain the second gimbal shaft 17 (step S4). At this time, the control section 41 does not drive the second restraint mechanism 29, and therefore the fourth gimbal shaft 27 is in a released state (step S4). The second gimbal shaft 17 remains restrained until predetermined termination conditions are established (YES in step S5; until the roll angle of the combination vehicle 2 becomes equal to or less than a predetermined value, for example).

As shown in FIG. 12A, with the second gimbal shaft 17 in a restrained state, rotation about the second gimbal shaft 17 which extends in the left-right direction is restricted, which results in a state similar to that with the general single-gimbal support mechanism which is shown in FIGs. 6A and 6B. In this state, the first flywheel 11 is rotating anticlockwise as viewed in plan (the direction of the angular speed of the first flywheel 11 is from bottom up). Thus, a gyro moment in an anticlockwise roll direction (Y direction) toward the front (X direction) is generated on the first flywheel 11 so that the gyro moment acts as a stabiliser against roll motion of the combination vehicle 2 that is clockwise (opposite to the Y direction) toward the front (X direction). This prevents an overturn of the combination vehicle 2 during a left turn.

Meanwhile, as shown in FIG. 12B, with the fourth gimbal shaft 27 in a released state, the second flywheel 21 is rotatably supported by two gimbal shafts 25 and 27. Therefore, the second flywheel 21 is free in three axial directions with respect to the combination vehicle 2, and in a vertical attitude (with the yaw axis coinciding with the vertical direction). Therefore, no gyro effect is generated on the second flywheel 21.

Returning to FIG. 11, after the predetermined termination conditions are established, the control section 41 controls the first restraint mechanism 19 so as to release the second gimbal shaft 17 (step S6). Thereafter, the process is returned.

On the other hand, when the combination vehicle 2 which is travelling turns right, that is, when the detected roll angle has a negative value (NO in step S3), the control section 41 controls the second restraint mechanism 29 of the second flywheel device 20 so as to restrain the fourth gimbal shaft 27 (step S7). At this time, the control section 41 does not drive the first restraint mechanism 19, and therefore the second gimbal shaft 17 is in a released state (step S7). The fourth gimbal shaft 27 remains restrained until predetermined termination conditions are established (YES in step S8; until the roll angle of the combination vehicle 2 becomes equal to or less than a predetermined value, for example).

As shown in FIG. 13A, with the second gimbal shaft 17 in a released state, the first flywheel 11 is rotatably supported by two gimbal shafts 15 and 17. Therefore, the first flywheel 11 is free in three axial directions with respect to the combination vehicle 2, and in a vertical attitude (with the yaw axis coinciding with the vertical direction). Therefore, no gyro effect is generated on the first flywheel 11.

Meanwhile, as shown in FIG. 13B, with the fourth gimbal shaft 27 in a restrained state, rotation about the fourth gimbal shaft 27 which extends in the left-right direction of the combination vehicle 2 is restricted, which results in a state similar to that with the single-gimbal support mechanism which is shown in FIGs. 6A and 6B. The second flywheel 21 is rotating in clockwise as viewed in plan (the direction of the angular speed of the second flywheel 21 is from top down). Thus, a gyro moment in a clockwise roll direction (opposite to the Y direction) toward the front (X direction) is generated on the second flywheel 11 so that the gyro moment acts as a stabiliser against roll motion of the combination vehicle 2 that is anticlockwise (Y direction) toward the front (X direction). This prevents an overturn of the combination vehicle 2 during a right turn.

After the predetermined termination conditions are established, the control section 41 controls the second restraint mechanism 29 so as to release the fourth gimbal shaft 27 (step S6). Thereafter, the process is returned.

In the embodiment, as has been described above, the first and second flywheels 11 and 21 rotate in opposite directions to each other. The direction of the gyro moment that is generated on the combination vehicle 2 by the first and second flywheels 11 and 21 depends on the rotational direction of the flywheels 11 and 12. Thus, the direction of the gyro moment that is generated on the combination vehicle 2 by the first flywheel 11 and the direction of the gyro moment that is generated on the combination vehicle 2 by the second flywheel 21 can be made different from each other.

When the combination vehicle 2 makes roll motion that is clockwise (opposite to the Y direction) toward the front (X direction), only rotation of the second gimbal shaft 17 of the first flywheel device 10 is restricted, without restricting rotation of the fourth gimbal shaft 27 of the second flywheel device 20, to generate a gyro effect only on the first flywheel 11. When the combination vehicle 2 makes roll motion that is anticlockwise (Y direction) toward the front (X direction), only rotation of the fourth gimbal shaft 27 of the second flywheel device 20 is restricted, without restricting rotation of the second gimbal shaft 17 of the first flywheel device 10, to generate a gyro effect only on the second flywheel 21. In other words, the flywheel that generates a gyro effect can be switched between the first and second flywheels 11 and 21 in accordance with the direction of roll motion of the combination vehicle 2. Thus, the gyro effect of either of the flywheels 11 and 21 can be caused to act as a stabiliser against roll motion of the combination vehicle 2 to prevent an overturn of the combination vehicle 2, irrespective of whether the combination vehicle 2 is turning left or right.

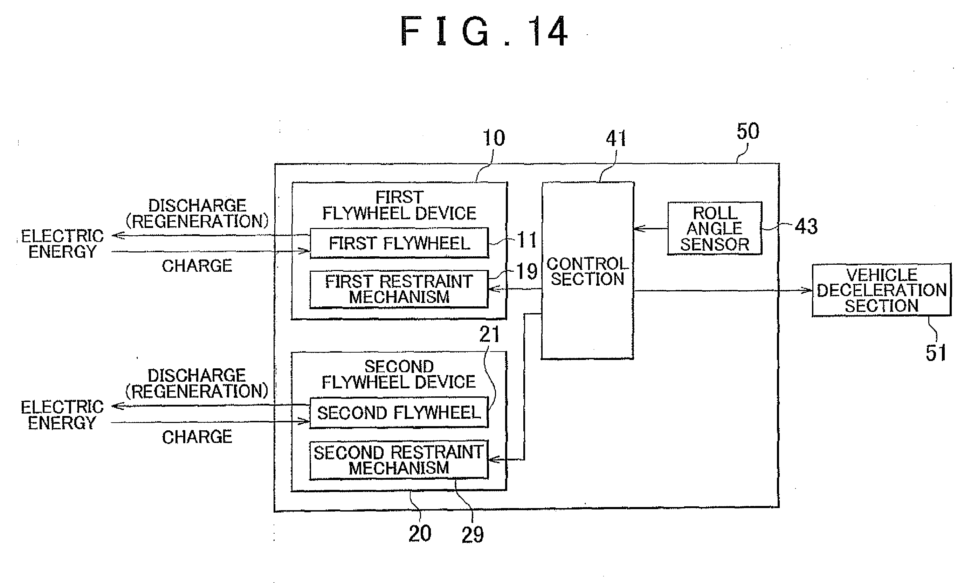

FIG. 14 is a block diagram that shows the electrical configuration of a vehicle overturn prevention device 50 according to a second embodiment of the present invention. In the embodiment, elements that correspond to those in the first embodiment which is shown in FIGs. 1 to 5 and 7 to 13 are denoted by the same reference numerals as those of the first embodiment which is shown in FIGs. 1 to 5 and 7 to 13 to omit redundant description. The vehicle overturn prevention device 50 is different from the counterpart in the first embodiment which is shown in FIGs. 1 to 5 and 7 to 13 in being capable of transmitting a deceleration command signal (deceleration control signal) to a vehicle deceleration section 51 of the tractor 3 and in that the alarming device 42 (see FIG. 5) has been removed.

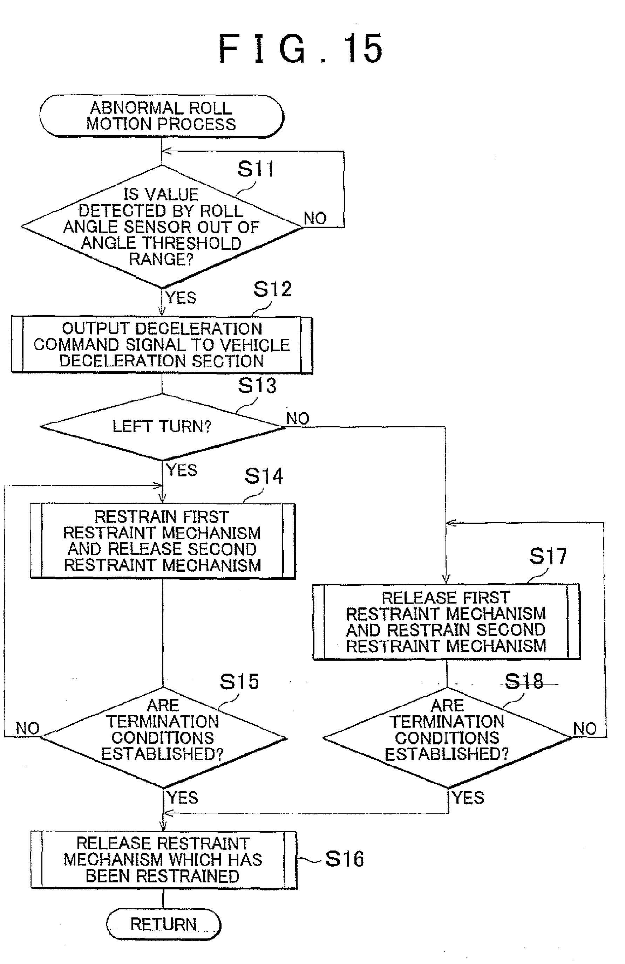

FIG. 15 is a flowchart that shows the flow of an abnormal roll motion process that is executed by the vehicle overturn prevention device 50 in the case where an abnormality occurs in roll motion of the combination vehicle 2. The process is executed by the control section 41 which is shown in FIG. 5.

First, during travel of the combination vehicle 2, the control section 41 monitors whether the value detected by the roll angle sensor 43 falls within an angle threshold range (step S11).

If an abnormality occurs in roll motion of the combination vehicle 2 so that the detected roll angle exceeds the angle threshold (YES in step S11), the control section 41 transmits a deceleration command signal for deceleration to the vehicle deceleration section 51 (step S12). The vehicle deceleration section 51 is a mechanism that decelerates the combination vehicle 2, and may be, for example, a mechanism that accelerates the flywheels 11 and 21, a brake mechanism (foot brake mechanism) for the tractor 3, a mechanism that applies engine braking for the tractor 3 (for example, a transmission), or the like. The vehicle deceleration section 51 is driven to reduce the vehicle speed on the basis of the transmitted deceleration command signal to decelerate the combination vehicle 2. When the combination vehicle 2 is decelerated, energy of the combination vehicle 2 is recovered by the flywheel 11, 21. That is, in the embodiment, the control section 41 can control the flywheel 11, 21 so as to decelerate the combination vehicle 2. When the energy is recovered, the rotational speed of the flywheel 11, 21 which is rotating is further raised to increase the gyro moment generated on the flywheel 11, 21.

As discussed earlier, roll motion of the combination vehicle 2 can be more effectively suppressed as the rotational speed of the flywheel 11, 21 which is rotating rises. Thus, an overturn of the combination vehicle 2 can be reliably prevented.

In addition, the control section 41 calculates the direction of the roll motion of the combination vehicle 2 on the basis of the detection output of the roll angle sensor 43. Specifically, the control section 41 detects whether the combination vehicle 2 is turning left. When the combination vehicle 2 which is travelling turns left, that is, when the detected roll angle has a positive value (YES in step S13), the control section 41 controls the first restraint mechanism 19 of the first flywheel device 10 so as to restrain the second gimbal shaft 17 (step S14). At this time, the control section 41 does not drive the second restraint mechanism 29, and therefore the fourth gimbal shaft 27 is in a released state (step S14). The second gimbal shaft 17 remains restrained until predetermined termination conditions are established (YES in step S15; until the roll angle of the combination vehicle 2 becomes equal to or less than a predetermined value, for example). After the predetermined termination conditions are established, the control section 41 controls the first restraint mechanism 19 so as to release the second gimbal shaft 17 (step S16). Thereafter, the process is returned.

On the other hand, when the combination vehicle 2 which is travelling turns right, that is, when the detected roll angle has a negative value (NO in step S 13), the control section 41 controls the second restraint mechanism 29 of the second flywheel device 20 so as to restrain the fourth gimbal shaft 27 (step S17). At this time, the control section 41 does not drive the first restraint mechanism 19, and therefore the second gimbal shaft 17 is in a released state. The fourth gimbal shaft 27 remains restrained until predetermined termination conditions are established (YES in step S18; until the roll angle of the combination vehicle 2 becomes equal to or less than a predetermined value, for example). After the predetermined termination conditions are established, the control section 41 controls the second restraint mechanism 29 so as to release the fourth gimbal shaft 27 (step S16). Thereafter, the process is returned.

The processes in steps S11, S13, S14, S15, S16, S17, and S18 are the same as the processes in steps S1, S3, S4, S5, S6, S7, and S8 in FIG. 11.

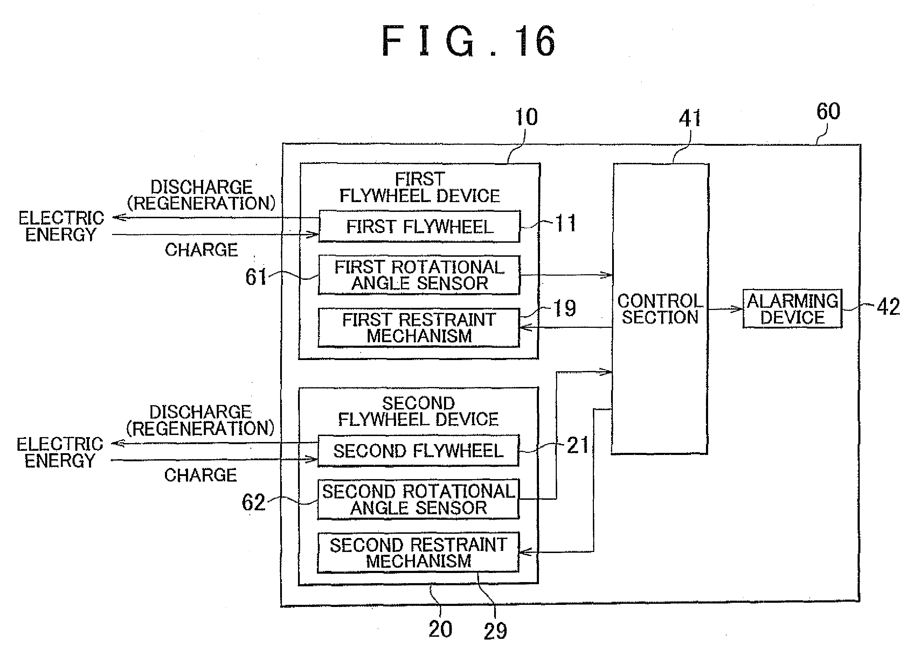

FIG. 16 is a block diagram that shows the electrical configuration of a vehicle overturn prevention device 60 according to a third embodiment of the present invention. In the embodiment, elements that correspond to those in the first embodiment which is shown in FIGs. 1 to 5 and 7 to 13 are denoted by the same reference numerals as those of the embodiment which is shown in FIGs. 1 to 5 and 7 to 13 to omit redundant description. The vehicle overturn prevention device 60 is different from the counterpart in the first embodiment which is shown in FIGs. 1 to 5 and 7 to 13 in that the first flywheel device 10 is provided with a first rotational angle sensor (roll state detection means) 61 (which is indicated by a double dotted line in FIG. 2) associated with the first gimbal shaft 15 to detect the angle of rotation of the first gimbal 16 in the roll direction. In addition, the second flywheel device 20 is provided with a second rotational angle sensor (roll state detection means) 62 (which is indicated by a double dotted line in FIG. 2) associated with the third gimbal shaft 25 to detect the angle of rotation of the third gimbal 26 in the roll direction. Moreover, the roll angle sensor 43 has been removed. Detection outputs of the first and second rotational angle sensors 61 and 62 are input to the control section 41. A resolver, for example, is adopted as the first and second rotational angle sensors 61 and 62.

As discussed earlier, during a turn of the combination vehicle 2, one of the first and second flywheels 11 and 21 is rotatably supported by both the first gimbal shaft 15 and the second gimbal shaft 17, and the other of the first and second flywheels 11 and 21 is restricted from rotating about the gimbal shaft 17, 27 which is orthogonal to the front-back direction of the combination vehicle 2. In this state, one of the first and second flywheels 11, 21 is free in three axial directions with respect to the combination vehicle 2. Thus, the rotational angle sensor 61, 62 which is provided in association with the flywheel 11, 21 is caused to function as a gyro sensor so that the roll angle of the combination vehicle 2 can be detected with no roll angle sensor 43.

Specifically, for example, in the case where the combination vehicle 2 which is travelling makes a left turn, the combination vehicle 2 makes roll motion that is anticlockwise (Y direction) toward the front (X direction) (see FIGs. 12A and 12B). In this state, the second flywheel 21 is rotatably supported by both the third gimbal shaft 25 and the fourth gimbal shaft 27, and the first flywheel 11 is restricted from rotating about the second gimbal shaft 17 which is orthogonal to the front-back direction of the combination vehicle 2. At this time, the control section 41 references the detection output of the second rotational angle sensor 62 to calculate the roll angle of the combination vehicle 2 on the basis of the detection output.

Meanwhile, in the case where the combination vehicle 2 which is travelling turns right, the combination vehicle 2 makes roll motion that is clockwise (opposite to the Y direction) toward the front (X direction) (see FIGs. 13A and 13B). In this state, the first flywheel 11 is rotatably supported by both the first gimbal shaft 15 and the second gimbal shaft 17, and the second flywheel 21 is restricted from rotating about the first gimbal shaft 15 which is orthogonal to the front-back direction of the combination vehicle 2. At this time, the control section 41 references the detection output of the first rotational angle sensor 61 to calculate the roll angle of the combination vehicle 2 on the basis of the detection output.

While three embodiments of the present invention have been described above, the present invention may be appropriately modified as follows.

For example, the first embodiment and the second embodiment may be combined with each other. That is, the control section 41 may be adapted to drive the alarming device 42 to issue a warming to decelerate the combination vehicle 2 and to transmit a deceleration command signal for deceleration to the vehicle deceleration section 51 if an abnormality occurs in roll motion of the combination vehicle 2 so that the detected roll angle exceeds an angle threshold.

The flywheel devices 10 and 20 may be used to perform control (pitch control) for suppressing a pitch phenomenon of the combination vehicle 2. When the speed of the combination vehicle (vehicle) 2 is abruptly reduced, a pitch phenomenon in which the front portion of the combination vehicle 2 is lowered and the rear portion of the combination vehicle 2 is raised may be caused. In general, the combination vehicle 2 is often abruptly decelerated when the combination vehicle 2 makes a turn. In this case, it is necessary to suppress occurrence of a pitch phenomenon in the combination vehicle 2, in addition to preventing an overturn of the combination vehicle 2, when the combination vehicle 2 makes a turn.

A third restraint mechanism (not shown) that is associated with the first gimbal shaft 15 to restrain the first gimbal shaft 15 to restrict rotation of the first flywheel 11 about the first gimbal shaft 15 may be provided, and a fourth restraint mechanism (not shown) that is associated with the third gimbal shaft 25 to restrain the third gimbal shaft 25 to restrict rotation of the second flywheel 21 about the third gimbal shaft 25 may be provided, so that the third and fourth restraint mechanisms (not shown) are subjected to control (pitch control) (so as to be restrained/released) to suppress occurrence of a pitch phenomenon of the combination vehicle 2.

A roll angle speed detection sensor that detects a roll angle speed may be adopted, besides the roll angle sensor 43, as the roll state detection means. The roll state (that is, the risk of an overturn) of the combination vehicle 2 may be detected using detection outputs of a vehicle speed sensor and a steering angle sensor or using detection outputs of a vehicle speed sensor and a lateral acceleration sensor.

The amount of energy that is stored in the first flywheel 11 which functions as the left-turn flywheel may be set to be larger than the amount of energy that is stored in the second flywheel 21 which functions as the right-turn flywheel. In an example, the diameter of the first wheel body may be made larger than that of the second wheel body, rather than the first and second wheel bodies have the same diameter as each other. In this case, if the first and second flywheels 11 and 21 rotate at the same speed as each other, the amount of energy that is stored in the first flywheel 11 can be made larger than the amount of energy that is stored in the second flywheel 21. In this case, the gyro moment that is generated on the first flywheel 11 is larger than the gyro moment that is generated on the second flywheel 21.

In countries where vehicles are driven on the left side of the road such as Japan, the radius of an arcuate track of a vehicle during a left turn is smaller than the radius of an arcuate track of the vehicle during a right turn. Thus, the angular speed for a turn is higher during a left turn than during a right turn. Therefore, a larger force in the roll direction acts on the combination vehicle 2 during a left turn than during a right turn. By setting the amount of energy that is stored in the first flywheel 11 to be larger than the amount of energy that is stored in the second flywheel 21, it is possible to secure the amount of energy that is stored in the first flywheel 11 which functions as the left-turn flywheel, even in the case where the total amount of energy that is stored in the two flywheels 11 and 21 is insufficient, to allow a gyro moment with a sufficient magnitude to act on the first flywheel 11, and to effectively suppress an overturn when the vehicle makes a left turn in countries where vehicles are driven on the left side of the road.

In another example in which the amount of energy that is stored in the first flywheel 11 is set to be larger than the amount of energy that is stored in the second flywheel 21, the first and second wheel bodies have generally the same diameter as each other, and the first flywheel 11 is rotated at a higher speed than that of the second flywheel 21.

The two flywheel devices may be arranged along the left-right direction in the combination vehicle 2. In this case, when a left turn is made, the combination vehicle 2 makes remarkable roll motion on the left side. Thus, the flywheel of the flywheel device on the left side may be rotated anticlockwise as view in plan. Meanwhile, when a right turn is made, the combination vehicle 2 makes remarkable roll motion on the right side. Thus, the flywheel of the flywheel device on the right side may be rotated clockwise as view in plan.

Alternatively, the two flywheel devices may be arranged along the up-down direction in the combination vehicle 2. The pair of flywheel devices may be mounted on the tractor 3, rather than on the trailer 4, or may be mounted on the container 6 which is mounted on the trailer 4. In the combination vehicle 2 which incorporates the vehicle overturn prevention device 1, 50, 60, a full trailer or a pole trailer may be adopted, rather than a semi-trailer, as a towed vehicle. The vehicle overturn prevention device 1, 50, 60 may be applied as a vehicle overturn prevention device for lorries and other large-sized vehicles, rather than combination vehicles.

While the invention has been described with reference to example embodiments thereof, it is to be understood that the invention is not limited to the described embodiments or constructions. To the contrary, the invention is intended to cover various modifications and equivalent arrangements. In addition, while the various elements of the disclosed invention are shown in various example combinations and configurations, other combinations and configurations, including more, less or only a single element, are also within the scope of the appended claims.

**Claims**

1. A vehicle overturn prevention device (1: 50: 60) that is mounted on a vehicle (2) to prevent an overturn of the vehicle (2), **characterised by** comprising:

   a first flywheel device (10) that includes a first-flywheel (11) that is configured as an energy storage device and that rotates in a first rotational direction, and a first gimbal support structure (16, 18) that rotatably supports the first flywheel (11) about a first shaft (15) and a second shaft (17) that extends orthogonally to the first shaft (15) and orthogonally to a front-back direction of the vehicle (2); and

a second flywheel device (20) that includes a second flywheel (21) that is configured as an energy storage device and that rotates in a second rotational direction that is opposite to the first rotational direction, and a second gimbal support structure (26, 28) that rotatably supports the second flywheel (21) about a third shaft (25) and a fourth shaft (27) that extends orthogonally to the third shaft (25) and orthogonally to the front-back direction of the vehicle (2),

wherein the first gimbal support structure (16, 18) includes first rotation restriction means (19) for restricting rotation of the first flywheel (11) about the second shaft (17);

wherein the second gimbal support structure (26, 28) includes second rotation restriction means (29) for restricting rotation of the second flywheel (21) about the fourth shaft (27); and

wherein the vehicle overturn prevention device (1: 50: 60) further includes rotation restriction control means for controlling the first rotation restriction means (19) and the second rotation restriction means (29) so as to restrict rotation of the first flywheel (11) without restricting rotation of the second flywheel (21) when the vehicle (2) makes roll motion in one roll direction and so as to restrict rotation of the second flywheel (21) without restricting rotation of the first flywheel (11) when the vehicle (2) makes roll motion in the other roll direction.

2. The vehicle overturn prevention device (1: 50: 60) according to claim 1, wherein the first flywheel device (10) and the second flywheel device (20) are arranged in one of the front-back direction, a left-right direction, or an up-down direction of the vehicle (2).

3. The vehicle overturn prevention device (1: 50: 60) according to claim 1 or 2, further comprising:

roll state detection means (43: 61, 62) for detecting a roll state associated with roll motion of the vehicle (2); and energy recovery control means for executing energy recovery control in which energy of the vehicle (2) is recovered by the first flywheel (11) and the second flywheel (21) in the case where the roll state which is detected by the roll state detection means (43: 61, 62) exceeds a threshold that is determined in advance.

4. The vehicle overturn prevention device (1: 50: 60) according to any one of claims 1 to 3, further comprising:

alarming means (42) for issuing a predetermined alarm to a driver of the vehicle (2); and alarm control means for controlling the alarming means (42) so as to issue an alarm that promotes an operation to decelerate the vehicle (2).

5. The vehicle overturn prevention device (1: 50: 60) according to any one of claims 1 to 4, further comprising vehicle deceleration control signal transmission means for transmitting a control signal for decelerating the vehicle (2).

6. The vehicle overturn prevention device (1: 54: 64) according to claim 5, wherein the vehicle deceleration control signal transmission means controls the energy recovery control means to decelerate the vehicle (2).

7. The vehicle overturn prevention device (1: 50: 60) according to any one of claims 1 to 6, wherein an amount of energy that is stored in the first flywheel (11) and an amount of energy that is stored in the second flywheel (21) are different from each other.

# F I G . 1

# F I G . 2

10(20)

14(24) 16(26)

15(25)

61(62)

17(27)

18(28)

15(25)

11(21)

13(23)

Z

X Y

# FIG.3A  FIG.3B

# FIG.4

# FIG.5

EP 2 524 859 A2

# F I G . 6A

# F I G . 6B

# F I G . 7A

NORMAL TRAVEL

15(25)　14(24)　10(20)
11(21)
17(27)　17(27)
Z
Y
X
15(25)

<DOUBLE-GIMBAL SUPPORT MECHANISM>
VEHICLE MOTION ⟵⤬⟶ GYRO EFFECT

# F I G . 7B

ABNORMAL ROLL

15(25)　14(24)　10(20)
17(27)　11(21)
17(27)
Z
Y
X
15(25)

GIMBAL SHAFT EXTENDING IN ROLL
DIRECTION IS RESTRAINED

# F I G . 7C

ROLL

15(25)　14(24)
11(21)
Y
Z
X
15(25)

<SINGLE-GIMBAL SUPPORT MECHANISM>
VEHICLE MOTION ⟵⟶ GYRO EFFECT
ROLL IS STABILSED

# FIG.8

CONTAINER

TRACTOR

Z

X

COUPLER

TRAILER

# F I G . 9

# F I G . 10

# FIG.11

```
        ┌─────────────────────┐
        │   ABNORMAL ROLL     │
        │   MOTION PROCESS    │
        └─────────────────────┘
                  │
                  ▼
              ╱───────╲        S1
           ╱   IS VALUE   ╲
        ╱   DETECTED BY ROLL  ╲    NO
       ⟨  ANGLE SENSOR OUT OF  ⟩────────┐
        ╲  ANGLE THRESHOLD    ╱         │
           ╲   RANGE?    ╱              │
              ╲───────╱                 │
                  │ YES      S2         │
                  ▼                     │
        ┌─────────────────────┐         │
        │   ISSUE WARNING     │         │
        └─────────────────────┘         │
                  │        S3           │
                  ▼                     │
              ╱───────╲       NO        │
           ╱ LEFT TURN? ╲───────────────┼──────┐
              ╲───────╱                 │      │
                  │ YES    S4           │      │
                  ▼                     │      │
   ┌──────────────────────┐            │      ▼
   │  RESTRAIN FIRST      │            │   ┌──────────────────────┐   S7
   │  RESTRAINT MECHANISM │            │   │   RELEASE FIRST      │
   │  AND RELEASE SECOND  │            │   │ RESTRAINT MECHANISM  │
   │  RESTRAINT MECHANISM │            │   │ AND RESTRAIN SECOND  │
   └──────────────────────┘            │   │ RESTRAINT MECHANISM  │
                  │         S5         │   └──────────────────────┘
                  ▼                    │              │        S8
              ╱───────╲               │              ▼
    NO    ╱    ARE     ╲              │          ╱───────╲
  ┌──────⟨ TERMINATION  ⟩             │       ╱    ARE     ╲     NO
  │       ╲ CONDITIONS ╱              │      ⟨ TERMINATION  ⟩──────┐
  │      ╲ESTABLISHED?╱               │       ╲ CONDITIONS ╱       │
  │          ╲───────╱                │      ╲ESTABLISHED?╱        │
  │              │ YES                │          ╲───────╱         │
  │              ▼                    │              │ YES         │
  │    ┌──────────────────────┐       │              │             │
  │    │  RELEASE RESTRAINT   │       │              │             │
  │    │ MECHANISM WHICH HAS  │  S6   │              │             │
  │    │   BEEN RESTRAINED    │       │              │             │
  │    └──────────────────────┘       │              │             │
  │              │                    │              │             │
  │              ▼                    │              │             │
  │       ┌───────────┐               │              │             │
  │       │  RETURN   │               │              │             │
  │       └───────────┘               │              │             │
```

# FIG.12A

DURING LEFT TURN

# FIG.12B

DURING LEFT TURN

# FIG.13A

DURING RIGHT TURN

# FIG.13B

DURING RIGHT TURN

# FIG.14

EP 2 524 859 A2

# FIG.15

```
        ┌─────────────────────┐
        │   ABNORMAL ROLL     │
        │   MOTION PROCESS    │
        └─────────────────────┘
                  │
                  ▼            S11
            ╱─────────────╲
           ╱   IS VALUE     ╲
          ╱ DETECTED BY ROLL  ╲  NO
         ╱ ANGLE SENSOR OUT OF ╲────┐
          ╲ ANGLE THRESHOLD    ╱    │
           ╲    RANGE?        ╱     │
            ╲───────────────╱       │
                  │ YES             │
                  ▼       S12       │
        ┌─────────────────────┐     │
        │ OUTPUT DECELERATION │     │
        │COMMAND SIGNAL TO VEHICLE  │
        │  DECELERATION SECTION │   │
        └─────────────────────┘     │
                  │       S13       │
            ╱─────────────╲         │
           ╱               ╲  NO    │
          ╱   LEFT TURN?    ╲───────┼─────┐
           ╲               ╱        │     │
            ╲─────────────╱         │     │
                  │ YES    S14      │     │
                  ▼                 │     ▼
        ┌─────────────────────┐     │  ┌─────────────────────┐
        │  RESTRAIN FIRST     │     │  │  RELEASE FIRST   S17│
        │RESTRAINT MECHANISM  │     │  │RESTRAINT MECHANISM  │
        │AND RELEASE SECOND   │     │  │AND RESTRAIN SECOND  │
        │RESTRAINT MECHANISM  │     │  │RESTRAINT MECHANISM  │
        └─────────────────────┘     │  └─────────────────────┘
                  │       S15       │            │      S18
            ╱─────────────╲         │      ╱─────────────╲
           ╱     ARE       ╲  NO    │     ╱     ARE       ╲  NO
     ┌────╱ TERMINATION     ╲───────┘    ╱ TERMINATION     ╲────┐
     │     ╲ CONDITIONS    ╱             ╲ CONDITIONS    ╱      │
     │      ╲ESTABLISHED? ╱               ╲ESTABLISHED? ╱       │
     │       ╲───────────╱                 ╲───────────╱        │
     │          │ YES                          │ YES           │
     │          ▼                              └───────────────┘
     │  ┌─────────────────────┐
     │  │ RELEASE RESTRAINT   │
     └──│ MECHANISM WHICH HAS │── S16
        │  BEEN RESTRAINED    │
        └─────────────────────┘
                  │
                  ▼
            ┌──────────┐
            │  RETURN  │
            └──────────┘
```

# F I G . 16

EP 2 524 859 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008143390 A

- JP 11069511 A